# EUROPÄISCHE PATENTSCHRIFT

(11) **EP 1 387 149 B1**
(45) Veröffentlichungstag und Bekanntmachung des Hinweises auf die Patenterteilung: **19.07.2017**
(21) Anmeldenummer: 03012006.7
(22) Anmeldetag: 28.05.2003
(51) Int. Cl.: G01F 1/66

(54) **Ultraschall-Durchflussmesser sowie Verfahren zum Betrieb desselben**
Ultrasonic flowmeter as well as operation method of the same
Débitmètre ultrasonique ainsi que procédé pour son opération

(30) Priorität: 31.07.2002 DE 10235032
(43) Veröffentlichungstag der Anmeldung: 04.02.2004
(73) Patentinhaber: Diehl Metering GmbH, 91522 Ansbach (DE)
(72) Erfinder: Hauenstein, Günther, 63477 Maintal (DE)
(74) Vertreter: Stippl, Hubert

(56) Entgegenhaltungen:
- EP-A- 0 897 102
- EP-A1- 0 081 663
- EP-A1- 0 451 355
- EP-A1- 0 559 938
- WO-A-86/02723

## Beschreibung

Die vorliegende Erfindung betrifft zum einen ein Verfahren zum Betrieb eines Ultraschall-Durchflußmessers gemäß dem Oberbegriff des Anspruchs 1, zum anderen einen Ultraschall-Durchflußmesser insbesondere zur Durchführung des vorerwähnten Verfahrens gemäß dem Oberbegriff des Anspruchs 3. Entsprechende Durchflußmesser eignen sich zur Erfassung von Strömungsgeschwindigkeiten und darauf aufbauend zur Erfassung von Durchflußmengen. Weiterhin eignen sich in Kombination mit Temperaturdifferenzmessungen zur Wärmeverbrauchserfassung und -verrechnung.

Aus der EP 0 451 355 A1 ist ein Meßwertgeber zur Bestimmung der Durchflußmenge einer strömenden Flüssigkeit mit einem an der Innenseite reflektierenden Meßrohr bekannt. Als besondere Maßnahme wird dort vorgeschlagen, die Länge L des Meßrohres kürzer als den halben Reflektionsabstand A auszubilden, da der überwiegende Teil der Ultraschallwellen beim Durchgang durch das Meßrohr hierbei noch keine Reflektion an seiner Innenwand erfahren hat.

Aus der EP 0 897 102 A1 ist ein Durchflußmesser mit einem Gehäuse mit Einlaßstutzen sowie Auslaßstutzen bekannt, zwischen denen eine von einem Medium in einer axialen Richtung durchströmte Ultraschall-Meßstrecke gebildet ist. Das Gehäuse ist hierbei beim Übergang von Einlaß- bzw. Auslaßstutzen zur Ultraschall-Meßstrecke inwändig mit einem Körper aus ultraschallabsorbierendem Material verkleidet. Hierdurch soll vermieden werden, daß ein Teil des vom Ultraschall-Wandler in der Sendephase abgestrahlten Ultraschallimpulses innerhalb des Meßrohrs reflektiert wird. Die Länge des Meßrohrs ist so zu dimensionieren, daß es zu keinen Wandreflektionen kommt.

Ferner ist in der EP 0 790 490 A1 ein Ultraschall-Meßwertgeber beschrieben, welcher als Nicht-Wellenleiter arbeitet. Zur Minimierung einer Schallreflektion in das Meßrohr hinein oder zum Ultraschall-Wandler zurück wird einerseits vorgeschlagen, die Stirnkante des Meßrohrs mit einem Winkel α anzuschrägen, der so gewählt ist, das der unter einem Winkel auftreffende, reflektierte Schall weder in das Meßrohr hinein noch direkt zum Ultraschall-Wandler zurückreflektiert wird. Darüberhinaus kann die Oberfläche der schrägen Stirnkante wellig ausgebildet sein, damit sie den Schall diffus reflektiert, oder mit einem ultraschallabsorbierenden Material verkleidet sein.

Aus der EP 0 559 938 A1 ist ein Durchflußmesser bekannt, bei dem an der Innenseite eines Meßrohreinsatzes mehrere Spiegel zur gerichteten Ausbreitung und Reflektion eines Ultraschall-Impulses vorgesehen sind.

Die WO 86/02723 beschreibt einen Ultraschall-Wandler mit dem unerwünschte Schallechos bedingt durch Reflektionen an den Wandlern vermieden werden sollen. Hierzu werden durch Vorsprünge oder Ausnehmungen an der aktiven Seite des Wandlers schmal begrenzte Schallwellenmaximas sowie eine schmal definierte, zwischen den Maximas liegende Schallwellenzunge erzeugt. Weiterhin wird vorgeschlagen, die vorerwähnten Schallwellenmaximas im Randbereich entweder nicht in die Meßstrecke einlaufen zu lassen oder aber die Schallwellenmaximas innerhalb der Meßstrecke zu absorbieren. Hierzu ist das Meßrohr an der Innenseite mit einem schallabsorbierenden Material ausgestattet.

Die EP 0 081 663 A1 betrifft einen Messwertgeber zur Bestimmung der Durchflussmenge einer strömenden Flüssigkeit. Zur Verringerung des das Messergebnis nachteilig beeinträchtigenden Oberwelleneinflusses wird vorgeschlagen, die Ultraschallwandler mit je einer Teilelektrode zu versehen, so dass diese ein Einzelresonanzverhalten mit annähernd glockenförmiger Schwingungsform aufweisen und/oder das Messrohr dünnwandig auszugestalten und/oder das Messrohr schallabsorbierend zu verkleiden und/oder auszukleiden.

Die EP 0 897 102 A1 beschreibt einen Ultraschall-Durchflussmesser, dessen Messrohr mit einem Ultraschall absorbierenden Material ausgekleidet ist.

Aus der EP 0 451 355 A1 ist ein Messwertgeber zur Bestimmung der Durchflussmenge einer strömenden Flüssigkeit bekannt, bei dem die Länge l des Messrohres kürzer ausgebildet ist als der halbe Reflektionsabstand, so dass das Messrohr nicht mehr als Wellenleiter wirkt, da der überwiegende Teil der Schallwellen beim Durchgang durch das Messrohr noch keine Reflektion an seiner Innenwand erfahren hat.

Die Aufgabe der vorliegenden Erfindung besteht darin, ein gattungsgemäßes Verfahren zur Verfügung zu stellen, mittels dem bei einfachem konstruktiven Aufbau des Ultraschall-Durchflußmessers eine hohe Meßgenauigkeit erzielt werden kann. Darüberhinaus soll das Verfahren die Herstellung besonders unterschiedlich dimensionierter Ultraschall-Durchflußmesser ermöglichen. Zudem besteht die Aufgabe der voliegenden Erfindung darin, einen entsprechenden Ultraschall-Durchflußmesser zur Verfügung zu stellen.

Die vorliegende Aufgabe wird beim erfindungsgemäßen Verfahren durch die Merkmale des kennzeichnenden Teils von Anspruch 1 gelöst.

Ein glockenförmiges Ultraschall-Feld ist eine Schallabstrahlung ohne wesentliche Ausprägung von Nebenkeulen.

Dadurch, daß die Ultraschall-Signale als glockenförmiges Ultraschall-Feld erzeugt werden, sind konstruktive Maßnahmen an der aktiven Oberfläche des Ultraschall-Wandler einerseits sowie andererseits an der Ausgestaltung der Meßrohranordnung nicht notwendig. Darüberhinaus ist der Wandlerabstand L frei wählbar. Der Wandlerabstand L kann im Vergleich zu bisherigen Konstruktionen, bei denen die Gesetzmäßigkeiten der Reflektionsminima bzw. -maxima innerhalb des Meßrohrs berücksichtigt werden müssen, außerhalb der darin vorgegebenen Grenzen festgelegt werden. Die freie Wählbarkeit des Wandlerabstandes L ermöglicht es, für unterschiedliche Durchflußdimensionierungen ein hinsichtlich des Wandlerabstandes vereinheitlichtes Gehäuse des Ultraschall-Durchflußmessers einzusetzen, wobei lediglich Meßrohre mit unterschiedlichem Durchmesser als Austauschteil eingesetzt werden. Hierdurch könne die Produktionskosten von Ultraschall-Durchflußmessern mit unterschiedlicher Durchflußdimensionierung erheblich reduziert werden. Das Merkmal, wonach die Meßstrecke als Nicht-Wellenleiter ausgebildet ist, stellt sicher, daß Reflektionen innerhalb des Meßrohrs nicht oder zumindest nahezu nicht auftreten und diese damit die Meßgenauigkeit nicht nachträglich beeinträchtigen können. Dadurch, daß keine Reflektionen innerhalb des Meßrohrs auftreten, wird zudem die Lebensdauer Ultraschall-Durchflußmessers erhöht, da Ablagerungen an der Innenseite des Rohrs keinen Einfluß mehr haben. Die Idee hierbei ist es, bewußt einen vergleichsweise hohen Absorptionsanteil an Schallenergie in Kauf zu nehmen, der - wie herausgefunden - unschädlich ist, da die restlichen Schallenergieanteile (mangels Reflektionsanteile) für eine genaue Messung ausreichen.

Ein glockenförmiges Ultraschall-Feld kann man erfindungsgemäß mit einem Wandler und einem beabstandeten Spiegel realisieren, in dem der Spiegel so klein gehalten ist, daß nur die Hauptkeule übertragen wird.

Zweckmäßigerweise wird das Ultraschall-Feld von einer durchgängig ebenen, aktiven Oberfläche eines Ultraschall-Wandlers ausgestrahlt. Besondere Maßnahmen zur Oberflächengestaltung des Ultraschall-Wandlers sind demzufolge nicht notwendig.

Was die freie Wählbarkeit des Wandlerabstands L anbelangt, befindet sich dieser zweckmäßigerweise außerhalb des errechneten Abstandes A des Wandlers zum ersten theoretischen Reflektionsmaximum Y oder zum theoretischen Reflektionsminimum X.

Die vorliegende Aufgabe wird beim erfindungsgemäßen Ultraschall- Durchflußmesser durch die Merkmale des kennzeichnenden Teils von Anspruch 3 gelöst.

Dadurch, daß die Meßstrecke als Nicht-Wellenleiter ausgebildet ist, der eine Reflektion vollständig oder nahezu vollständig ausschließt resultiert die Möglichkeit, den Ultraschall-Durchflußmesser konstruktiv einfach und kostengünstig auszugestalten, entgegen den theoretischen Gesetzmäßigkeiten der Reflektionstheorie zu dimensionieren und gleichzeitig eine erhöhte Meßgenauigkeit zu gewährleisten. Das glockenförmige Ultraschall-Feld wird hierbei von einem Ultraschall-Wandler in Kombination mit einem Spiegel erzeugt. Erfindungsgemäß ist die Grenzschicht so auszugestalten, daß möglichst keine Reflektion an dieser stattfindet und gleichzeitig die Zwischenschicht eine optimale Schallabsorption gewährleistet. Die Zwischenschicht ist erfindungsgemäß eine Wasserschicht.

Um Reflektionen an der Grenzschicht im Wesentlichen zu vermeiden, wird diese zweckmäßigerweise mit einer Wandstärke von kleiner gleich 1,5 mm ausgebildet.

Gemäß einer weiteren Ausgestaltung des erfindungsgemäßen Ultraschall-Durchflußmessers weist das Meßrohr Spiegel mit hoher Reflektion auf.

Zweckmäßigerweise ist weiterhin ein konstanter Wandlerabstand L für unterschiedliche Geometrien des Meßrohrs vorgesehen. Damit können bei der Produktion von Durchflußmesserserien unterschiedlicher Durchflußdimensionen Standardisierungen von Teilen des Durchflußmessers durchgeführt werden.

Insbesondere kann für unterschiedliche Durchflußdimensionen ausgelegte Meßrohre ein einheitliches Gehäuse eingesetzt werden.

Zweckmäßige Ausgestaltungen der vorliegenden Erfindung werden nachstehend anhand der Zeichnungsfiguren näher erläutert.

Es zeigen:
- Fig. 1: eine Meßstrecke eines Ultraschall-Durchflußmessers;
- Fig. 2: die Meßstrecke gemäß Fig. 1 unter Bezugnahme auf theoretische Reflektionsmaxima sowie -minima;
- Fig. 3: eine weitere Ausgestaltung einer Meßstrecke unter Verwendung von Spiegel zur Umlenkung der Ultraschall-Signale;
- Fig. 4: eine weitere Ausgestaltung der Meßstrecke unter Verwendung von in dem Meßrohr angeordneten Spiegeln sowie

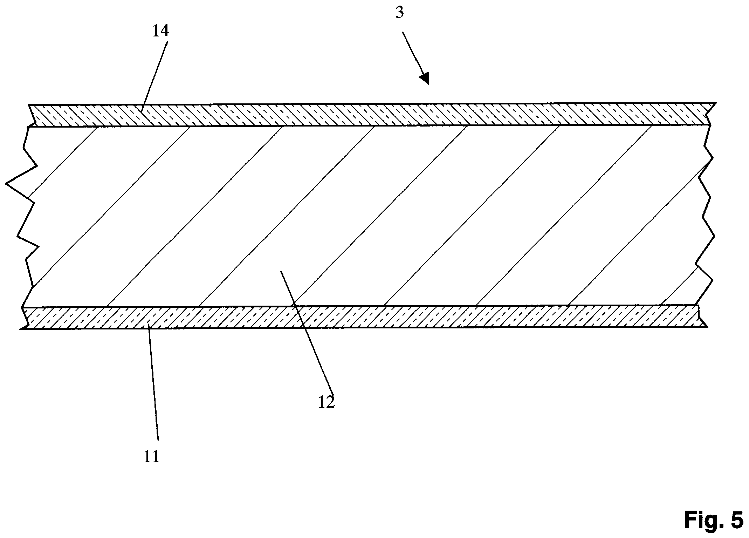

- Fig. 5: eine Detaildarstellung einer Ausgestaltung der Auskleidung des Meßrohrs oder des Meßrohrs selbst gemäß der vorliegenden Erfindung.

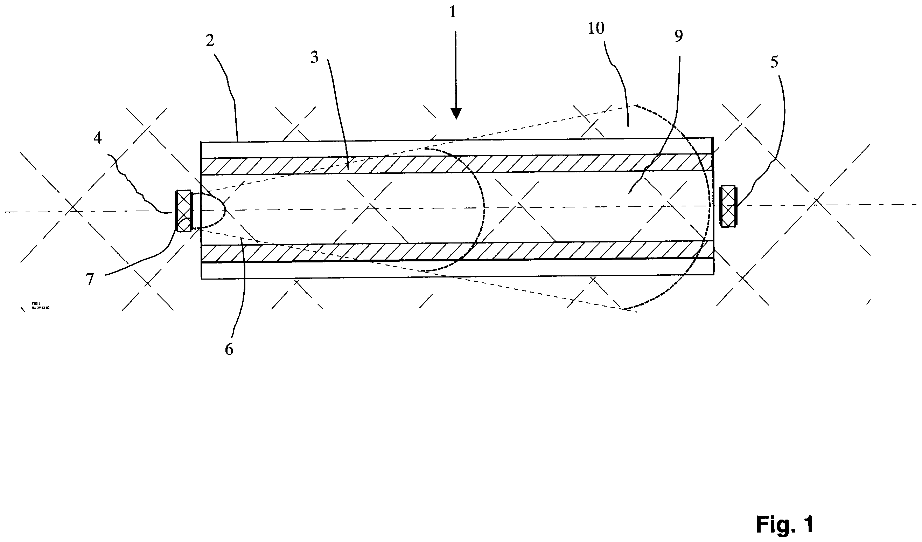

Bezugsziffer 1 in Fig. 1 bezeichnet als technologischen Hintergrund zum Besseren Verständnis eine Meßstrecke für den Einsatz in einem sogenannten Ultraschall-Durchflußmesser in ihrer Gesamtheit. Sie umfaßt ein geradliniges Meßrohr 2 sowie einen ersten Wandler 4 mit aktiver Oberfläche 7 zur Erzeugung eines Schallimpulses sowie einen zweiten Wandler 5 zum Empfang des vom ersten Wandler 4 erzeugten Schallimpulses.

An der Innenseite des Meßrohrs 2 befindet sich eine Auskleidung 3 aus schallabsorbierendem Material.

Bezugsziffer 6 kennzeichnet ein glockenförmiges Ultraschall-Feld, die von dem ersten Wandler 4 erzeugt in das Meßrohr 2 eintritt. Hierzu besitzt der erste Wandler 4 eine eben ausgebildete, aktive Oberfläche 7.

Die an der Auskleidung 3 auftreffenden Anteile 10 der Ultraschall-Keule werden von der Auskleidung 3 absorbiert, d.h. nicht reflektiert. Der übrige noch innerhalb des Meßrohrs befindliche Anteil 9 der Ultraschall-Keule bewegt sich auf den zweiten Wandler 5 zu, wobei die Schallenergie der sich über die Länge des Meßrohrs 2 ausdehnenden Ultraschall-Keule zwangsläufig abnimmt. Der verbleibende reflektionsfreie Schallanteil 9 wird am zweiten Wandler 5 erfaßt und zur Berechnung des Laufzeitunterschieds verwendet.

Die Laufzeiterfassung erfolgt auch in Gegenrichtung der in Fig. 1 dargestellten Richtung, um einen Laufzeitunterschied zu erzielen.

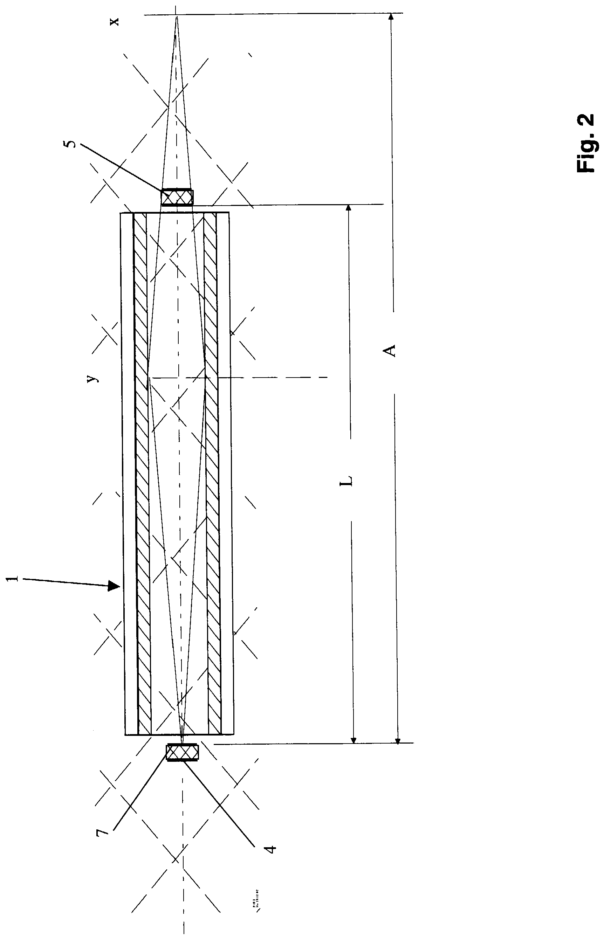

Die Darstellung gemäß Figur 2 zeigt die Anordnung des ersten Wandlers 4 zum zweiten Wandler 5 unter Berücksichtigung des theoretischen Reflektionsverhaltens. Hinsichtlich dieses theoretischen Reflektionsverhaltens wird auf die EP 0 451 355 A1 verwiesen. Die Besonderheit besteht darin, daß der zweite Wandler 5 an einem Punkt angeordnet ist, welcher vom ersten Wandler 4 weiter entfernt ist, als das erste Reflektionsmaximum Y. Aus diesem Grund kann ohne Einbußen an Meßgenauigkeit die Länge L der Meßstrecke 1 für unterschiedliche Meßrohrdurchmesser konstant gehalten werden. Daraus folgt, daß bei gleichbleibender Meßgenauigkeit für unterschiedliche Durchflußmesser die Teilevielzahl erheblich reduziert werden kann.

Bei der Ausgestaltung der Fig. 2 liegt der zweite Wandler 5 zwischen dem ersten Reflektionsmaximum Y sowie ersten Reflektionsminimum X. Die Entfernung des ersten Reflektionsminimums X zum ersten Wandler 4 ist in Fig. 2 mit A gekennzeichnet. Diese Ausgestaltung erlaubt es, die Länge L der Meßstrecke 1 beliebig festzulegen.

Gemäß der Ausgestaltung in Fig. 1 läuft die glockenförmige Ultraschall-Keule 6 vollständig in das Meßrohr ein.

Dieses schallabsorbierende Material besitzt eine Impedanz Z₀ ≤ 2 10⁶ kg/m² sec. Zweckmäßigerweise ist die Impedanz Z₀ des schallabsorbierenden Materials der Auskleidung 3 kleiner als die des Mediums (z.B. bei einer Temperatur von 20° C). Als schallabsorbierendes Material ist zweckmäßigerweise PTFE, PVDF, Silikon, Weichgummi, VITON oder EPDM vorgesehen.

Sofern es sich um Heißwasser bis zu 150° C handeln sollte, wird als schallabsorbierendes Material bevorzugt PVDF eingesetzt.

Gemäß einer alternativen (nicht dargestellten) Ausgestaltung kann anstelle einer Auskleidung des Meßrohrs 2 das Meßrohr 2 selbst aus schallabsorbierendem Material bestehen.

Die Funktion eines Nicht-Wellenleiters nach der vorliegenden Erfindung ist dann gegeben, wenn mehr als 70 %, insbesondere mehr als 85 % der auf die Oberfläche des Meßrohrs 2 auftreffenden Schallanteile in der Meßstrecke nicht reflektiert werden.

Die Wanddicke der Auskleidung 3 bzw. des Meßrohrs 2 aus schallabsorbierendem Material selbst wird so gewählt, daß ausreichend Schallenergie absorbiert werden kann. Die Wanddicke liegt hierbei in einem Bereich von größer oder gleich 1,5 mm, zweckmäßigerweise bei ca. 2 mm.

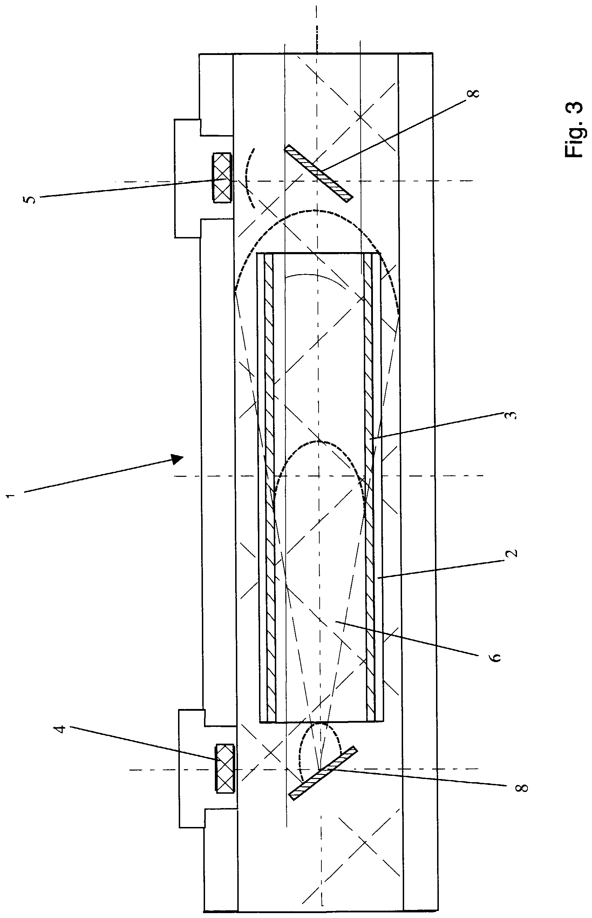

Fig. 3 zeigt eine Ausgestaltung eines erfindungsgemäßen Ultraschall-Durchflußmessers unter Verwendung von eingesetzten Spiegeln 8. Hierdurch kann ein glockenförmiges Ultraschall-Feld erzeugt werden sowie eine vorteilhafte Montage der Wandler durchgeführt werden.

Hinsichtlich der Wanddicke und Materialwahl gelten in Bezug auf die Ausgestaltung gemäß Fig. 3 die bereit zu den Figuren 1 und 2 gemachten Feststellungen.

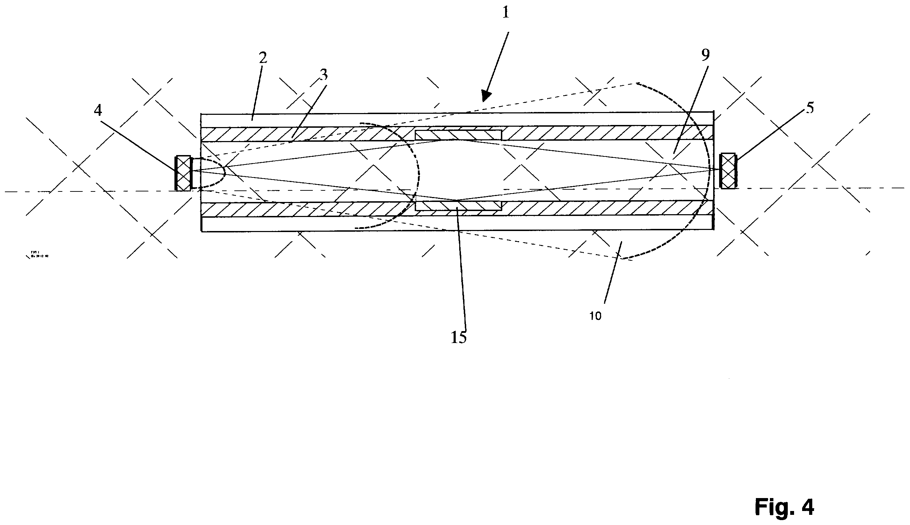

Figur 4 zeigt eine abgewandelte Ausgestaltung des Ultraschall-Durchflußmessers. Zur Gewährleistung einer gezielten Reflektion innerhalb des ansonsten als Nicht-Wellenleiter arbeitenden Meßrohrs 2 ist auf halbem Wege der Meßstrecke 1 d.h. in der Mitte des Abstands der beiden Wandler 4, 5 ein Spiegel 15 angeordnet. Der Spiegel 15 gewährleistet eine Reflektion lediglich der in diesem Bereich an die Wandung auftreffenden Schallanteile. Der zweite Wandler 5 befindet sich hierbei im Reflektionsminimum der vom Spiegel 15 reflektierten Ultraschall-Signale. Der Spiegel 15 kann im Meßrohr 2 vollumfänglich oder aber in Teil-Umfangsbereichen angeordnet sein.

Bezugsziffer 5 zeigt einen Teilausschnitt des Aufbaus der Auskleidung 3 bzw. der Wandlung des Meßrohrs 2 gemäß der vorliegenden Erfindung. Der Aufbau umfaßt eine Grenzschicht 11, die so ausgestaltet ist, daß sie möglichst wenig Reflektion verursacht. Hierzu weist die Grenzschicht 11 zweckmäßigerweise eine Wandstärke von kleiner 1,5 mm auf. Im Anschluß daran schließt sich eine Zwischenschicht zur Absorption von die Grenzschicht 11 durchlaufenden Ultraschall-Signalen an. Die Zwischenschicht 12 weist eine Impedanz Z_{zwischenschicht} von kleiner gleich der Impedanz des Mediums Z_{medium} auf. Erfindungsgemäß handelt es sich bei der Zwischenschicht 12 eine Wasserschicht. Im Anschluß daran befindet sich eine weitere äußere Schicht 14.

Die vorliegende Erfindung gewährleistet zum einen eine Erhöhung der Lebensdauer, zum anderen die Möglichkeit der Reduzierung der Abmessungen des Ultraschall-Durchflußmessers ohne Einbußen an Meßgenauigkeit. Die Erfindung stellt daher einen ganz besonderen Beitrag auf dem einschlägigen Gebiet der Technik dar.

## Patentansprüche

1. Verfahren zum Betrieb eines Ultraschall-Durchflußmessers, wobei zur Ermittlung der Durchflußmenge an Wasser die Laufzeit von Ultraschall-Signalen entlang einer Meßstrecke sowohl in der einen als auch in der anderen Richtung gemessen und daraus ein Laufzeitunterschied errechnet wird,
und wobei
das Meßrohr (2) als Nicht-Wellenleiter ausgebildet ist, der Reflektionen vollständig oder zumindest nahezu vollständig ausschließt, indem
(a) das Meßrohr (2) eine Grenzschicht (11) sowie eine sich an deren Außenseite anschließende Zwischenschicht (12) in Form einer Wasserschicht umfasst und
(b) die Grenzschicht (11) derart ausgestaltet ist, dass die Ultraschall-Signale durch die Grenzschicht (11) hindurch in die Zwischenschicht (12) einlaufen, **dadurch gekennzeichnet, dass**
die Ultraschall-Signale als glockenförmiges Ulraschall-Feld (6) erzeugt werden, wobei
das glockenförmige Ultraschall-Feld von einem Ultraschall-Wandler (4, 5) in Kombination mit einem Spiegel (8) erzeugt wird.

2. Verfahren nach Anspruch 1,
**dadurch gekennzeichnet, daß**
das Ultraschall-Feld (6) von einer durchgängig ebenen, aktiven Oberfläche (7) des Ultraschall-Wandlers (4, 5) ausgestrahlt wird.

3. Ultraschall-Durchflußmesser, insbesondere zur Durchführung des Verfahrens gemäß einem der vorhergehenden Ansprüche mit
einem ersten Ultraschall-Wandler (4), einem zweiten Ultraschall-Wandler (5) oder Reflektor, einer vom ersten (4) und zweiten Ultraschall-Wandler (5) oder vom ersten Ultraschall-Wandler (4) und dem Reflektor gebildeten Meßstrecke (1) sowie einem Meßrohr (2), welches die Meßstrecke (1) umgibt, wobei das Meßrohr (2) als Nicht-Wellenleiter ausgebildet ist, welches Reflektionen vollständig oder nahezu vollständig ausschließt, indem
(a) das Meßrohr (2) eine Grenzschicht (11) sowie eine sich an deren Außenseite anschließende Zwischenschicht (12) in Form einer Wasserschicht umfasst und
(b) die Grenzschicht (11) derart ausgestaltet ist, dass die Ultraschall-Signale durch die Grenzschicht (11) hindurch in die Zwischenschicht (12) einlaufen,
**dadurch gekennzeichnet, dass**
die Ultraschall-Signale als glockenförmiges Ultraschall-Feld (6) erzeugt werde, wobei
das glockenförmige Ultraschall-Feld von dem ersten Ultraschall-Wandler (4) in Kombination mit einem Spiegel (8) erzeugt wird.

4. Durchflußmesser nach Anspruch 3,
**dadurch gekennzeichnet, daß**
die Wanddicke der Grenzschicht (11) kleiner oder gleich 1, 5 mm ist.

5. Durchflußmesser nach Anspruch 3 oder 4,
**dadurch gekennzeichnet, daß**
zur Ablenkung der Ultraschall-Signale Spiegel (8) mit hoher Reflektion vorgesehen sind.

## Claims

1. Method for operating an ultrasonic flowmeter, wherein the time of flight of ultrasound signals along a measurement distance is measured with a measurement pipe (2), which encloses the measurement distance (1), both in one and in the opposite direction and a time of flight difference is calculated therefrom in order to ascertain the flow rate of water, and wherein the measurement pipe (2) is configured in the form of a non-waveguide, which completely or at least nearly completely excludes reflections by
(a) the measurement pipe (2) comprising a boundary layer (11) and an intermediate layer (12) which adjoins the outer side of the boundary layer and is in the form of a water layer, and
(b) the boundary layer (11) being configured such that the ultrasound signals pass through the boundary layer (11) into the intermediate layer (12),
**characterized in that** the ultrasound signals are generated as a bell-shaped ultrasound field (6), wherein the bell-shaped ultrasound field is generated by an ultrasonic transducer (4, 5) in combination with a mirror (8).

2. Method according to Claim 1, **characterized in that** the ultrasound field (6) is emitted by a consistently flat, active surface (7) of the ultrasonic transducer (4, 5).

3. Ultrasonic flowmeter, in particular for carrying out the method according to one of the preceding claims, having a first ultrasonic transducer (4), a second ultrasonic transducer (5) or reflector, a measurement distance (1) which is formed by the first ultrasonic transducer (4) and second ultrasonic transducer (5) or by the first ultrasonic transducer (4) and the reflector, and a measurement pipe (2) which encloses the measurement distance (1), wherein the measurement pipe (2) is in the form of a non-waveguide, which completely or nearly completely excludes reflections by
(a) the measurement pipe (2) comprising a boundary layer (11) and an intermediate layer (12) which adjoins the outer side of the boundary layer and is in the form of a water layer, and
(b) the boundary layer (11) being configured such that the ultrasound signals pass through the boundary layer (11) into the intermediate layer (12),
**characterized in that** the ultrasound signals are generated as a bell-shaped ultrasound field (6), wherein the bell-shaped ultrasound field is generated by an ultrasonic transducer (4, 5) in combination with a mirror (8).

4. Flowmeter according to Claim 3, **characterized in that** the wall thickness of the boundary layer (11) is less than or equal to 1.5 mm.

5. Flowmeter according to Claim 3 or 4, **characterized in that** mirrors (8) with high reflectivity are provided for deflecting the ultrasound signals.

## Revendications

1. Procédé pour faire fonctionner un débitmètre à ultrasons, le débit volumique d'eau étant déterminé en mesurant le temps de propagation de signaux ultrasoniques à la fois dans un sens et dans l'autre le long d'un segment de mesure avec un tube de mesure (2) qui entoure le segment de mesure (1), puis en calculant une différence de temps de propagation à partir de cela,
et
le tube de mesure (2) étant réalisé en tant que non guide d'ondes, qui exclut complètement ou au moins presque complètement les réflexions en ce que
(a) le tube de mesure (2) comprend une couche limite (11) ainsi qu'une couche intermédiaire (12) qui se rattache au côté extérieur de celle-ci sous la forme d'une couche d'eau et
(b) la couche limite (11) est configurée de telle sorte que les signaux ultrasoniques pénètrent dans la couche intermédiaire (12) à travers la couche limite (11),
**caractérisé en ce que**
les signaux ultrasoniques sont générés sous la forme d'un champ d'ultrasons (6) en forme de cloche,
le champ d'ultrasons en forme de cloche est généré par un transducteur d'ultrasons (4, 5) en combinaison avec un miroir (8).

2. Procédé selon la revendication 1, **caractérisé en ce que** le champ d'ultrasons (6) est rayonné par une surface (7) active continuellement plane du transducteur d'ultrasons (4, 5).

3. Débitmètre à ultrasons, notamment destiné à mettre en oeuvre le procédé selon l'une des revendications précédentes, comprenant
un premier transducteur d'ultrasons (4), un deuxième transducteur d'ultrasons (5) ou réflecteur, un segment de mesure (1) formé par le premier (4) et le deuxième transducteur d'ultrasons (5) ou par le premier transducteur d'ultrasons (4) et le réflecteur, ainsi qu'un tube de mesure (2) qui entoure le segment de mesure (1),
le tube de mesure (2) étant réalisé en tant que non guide d'ondes, qui exclut complètement ou presque complètement les réflexions en ce que
(a) le tube de mesure (2) comprend une couche limite (11) ainsi qu'une couche intermédiaire (12) qui se rattache au côté extérieur de celle-ci sous la forme d'une couche d'eau et
(b) la couche limite (11) est configurée de telle sorte que les signaux ultrasoniques pénètrent dans la couche intermédiaire (12) à travers la couche limite (11),
**caractérisé en ce que** les signaux ultrasoniques sont générés sous la forme d'un champ d'ultrasons (6) en forme de cloche,
le champ d'ultrasons en forme de cloche est généré par le premier transducteur d'ultrasons (4) en combinaison avec un miroir (8).

4. Débitmètre selon la revendication 3, **caractérisé en ce que** l'épaisseur de paroi de la couche limite (11) est inférieure ou égale à 1,5 mm.

5. Débitmètre selon la revendication 3 ou 4, **caractérisé en ce que** des miroirs (8) à haute réflexion sont prévus pour la déviation des signaux ultrasoniques.
